# EUROPEAN PATENT SPECIFICATION

(11) **EP 4 623 200 B1**
(45) Date of publication and mention of the grant of the patent: **28.10.2026**
(21) Application number: 23813703.8
(22) Date of filing: 27.11.2023
(51) Int. Cl.: F03D 1/06, F03D 13/40

(54) **METHOD FOR TRANSPORTING A WIND TURBINE BLADE**
VERFAHREN ZUM TRANSPORT EINER WINDTURBINENSCHAUFEL
PROCÉDÉ DE TRANSPORT D'UNE PALE D'ÉOLIENNE

(30) Priority: 24.01.2023 EP 23382052
(43) Date of publication of application: 01.10.2025
(73) Proprietor: Siemens Gamesa Renewable Energy Eolica S.L., 31192 Sarriguren (Navarra) (ES)
(72) Inventor: PREVITALI, Francesco, 22453 Hamburg (DE); MATHIS, Lukas, 24107 Kiel (DE); ROJO SAIZ, Nicolas, 31192 Tajonar (ES)
(74) Representative: SGRE-Association
(86) International application number: PCT/EP2023/083228
(87) International publication number: WO 2024/156400

(56) References cited:
- EP-B1- 2 666 669
- US-A1- 2016 369 771
- US-A1- 2022 126 886
- US-B2- 8 641 339

## Description

The present invention relates to a method for transporting a wind turbine blade.

One way to produce more power using a wind turbine under given wind conditions is to increase the size of the blades. Currently, blades with a length of 50 to 100 meters or more are manufactured. However, the transportation of wind turbine blades is becoming increasingly difficult for increasing blade lengths. Wind turbine blades are, for example, transported overland by road vehicles or trains from a manufacturing site of the blades to an erection site of the wind turbine or a harbor site. However, curvatures of roads and railways are a challenge for the transportation of long blades.

One approach to deal with the difficulties involved in manufacturing and transporting large blades is to manufacture the blades in segments and to assemble the segments on-site. US 2016/369 771 A1 discloses a wind turbine blade having a primary and a secondary blade module and a system for transporting the primary blade module. However, joining of pre-manufactured blade segments such that a sufficient strength of the joint is provided is a difficult and costly process.

It is one object of the present invention to provide an improved method for transporting a wind turbine blade.

Accordingly, a method for transporting a wind turbine blade is provided. The method comprises:
a) providing a blade with a compliant portion forming a flexure hinge for being bent around a bending axis arranged perpendicular to a length direction of the blade,
b) transporting the blade along a curved transportation path, wherein the flexure hinge is bent according to a curvature of the transportation path, and
c) reinforcing the compliant portion.

By having the blade with the compliant portion forming the flexure hinge, the blade is provided with a flexibility that eases transportation of the blade on a curved transportation path (i.e. a transportation path having curves) such as a road or railway. Due to the flexibility, even very long blades with a length of more than 50 to 80 meters can be transported overland by road vehicles or trains.

In particular, bending of the blade is possible within the compliant portion by deforming a material of the blade in the compliant portion.

The flexure hinge is, in particular, a compliant hinge. The flexure hinge allows movement of rigid blade portions relative to each, said rigid blade portions being connected with each other (e.g., in the length direction of the blade) by the flexure hinge. Here, "rigid blade portions" means that these blade portions are more rigid and/or stiffer than the compliant hinge.

A stiffness of the blade (in the transportation state) within the compliant portion is, in particular, smaller than a stiffness of the blade outside of the compliant portion. In other words, around the joint, the compliant portion has a smaller flexural rigidity than the rigid blade portions connected with each other by the compliant portion.

The smaller stiffness of the compliant portion compared to the stiffness of said rigid blade portions is, in particular, realized by different physical dimensions of the cross-section of the compliant portion compared to the cross-section of the rigid blade portions.

The higher flexibility of the blade in the compliant portion is, for example, provided by configuring the blade (in the transportation state) with a thinner (smaller cross-section area) portion in the compliant portion than compared to portions of the blade outside of the compliant portion.

The blade as provided in step a) is a blade prepared for (e.g., overland) transportation. Thus, the blade in step a) and b) is a blade in a transportation state. In particular, the blade in step a) and b) is not yet ready for being installed at the hub of the wind turbine. Only, after reinforcing the compliant portion of the blade in step c), the blade is ready for being installed at the hub of the wind turbine.

The transportation path on which the blade is transported during step b) includes, for example, a road or railway. The transportation path includes, for example, one or more curves. The blade is transported in step b), for example, by a road vehicle such as a truck or by a train. Further, the blade is transported during step b), for example, from a departure site to an arrival site.

For rail transport, the blade is, for example, fixed to two or more rail carts. During rail transportation, the rail carts move relative to each other causing the blade to bend at its compliant hinge.

For road transport, the blade is, for example, fixed to two or more trailers of a tractor-trailer (semitrailer). During road transportation, the trailers move relative to each other causing the blade to bend at its compliant hinge.

In embodiments, the compliant hinge may include one or more actuators to actively bend the blade at its compliant hinge.

Reinforcing the compliant portion in step c) is, for example, carried out at the arrival site. After reinforcing the compliant portion in step c), the blade is, for example, ready for being lifted to the rotor hub of the wind turbine.

The arrival site is, for example, an erection site of the wind turbine. The arrival site may, however, also be an intermediate station from which the blade is transported - e.g., after step c) - by other means to a final destination (i.e. the erection site). The arrival site may, for example, be a harbor site from which the blade is transported oversea by a vessel.

The transported blade is, for example, an entire blade extending from a root portion thereof to a tip portion thereof.

The length direction of the blade is, in particular, a direction from the root portion to the tip portion of the blade.

A length of the blade is, in particular, a distance from the root portion to the tip portion of the blade. A length of the blade is, for example, 50 meters or more, 70 meters or more, 90 meters or more and/or 100 meters or more.

The method may also be carried out for transporting - instead of an entire wind turbine blade - a lengthwise wind turbine blade section.

The wind turbine blade is configured to become, after step c), part of a rotor of a wind turbine. The wind turbine is an apparatus to convert the wind's kinetic energy into electrical energy. The wind turbine comprises, for example, the rotor having one or more of the blades connected each to a hub, a nacelle including a generator, and a tower holding, at its top end, the nacelle. The tower of the wind turbine may be connected via a transition piece to a foundation of the wind turbine, such as a monopile in the seabed, a floating foundation anchored to the seabed or a concrete foundation.

The wind turbine blade, e.g., its root section, is configured for being fixedly or rotatably connected to the hub. Apart from a (cylindrical) root section and apart from the compliant portion before reinforcing it, the wind turbine blade is formed aerodynamically. The wind turbine blade comprises, for example, a pressure side and a suction side. The pressure side and the suction side are connected with each other at a leading edge and a trailing edge. The pressure and suction sides and the leading and trailing edges define an airfoil of the wind turbine blade.

The wind turbine blade comprises a shell made from, for example, a fiber-reinforced laminate.

According to an embodiment, the blade comprises a remaining structure extending throughout the compliant portion and a recessed structure having at least one recess in the compliant portion.

Thus, the flexure hinge is realized by providing the at least one recess of the recessed structure in the compliant portion of the blade such that the remaining structure is the only structure of the blade remaining in and extending throughout the compliant portion.

In other words, the flexure hinge is formed by not yet providing all necessary structural elements of the blade within the compliant portion.

The blade comprises said remaining structure and said recessed structure, in particular, in a transportation state of the blade. Further, said remaining structure and said recessed structure are configured to remain in the blade after transportation of the blade and for operation of the wind turbine. The structural elements missing in the recessed structure of the blade are provided in step c).

The remaining structure extends, for example, along more than 50% of the blade length, more than 70% of the blade lengths, more than 90% of the blade lengths and/or along the entire blade from a root portion of the blade to a tip portion of the blade. In addition or instead, the remaining structure extends, for example, along at least a portion of the blade outside of the compliant portion.

According to a further embodiment, the blade comprises at least two blade portions connected to each other by the flexure hinge, the flexure hinge being configured to move the blade portions relative to each other by bending the flexure hinge around the bending axis.

For example, the flexure hinge is configured to incline the blade portions relative to each other by bending the flexure hinge around the bending axis.

The blade portions are, in particular, not entirely separated from each other but are connected with each other by the remaining structure of the blade. The blade portions have, in particular, (e.g., due to their physical dimensions, in particular their larger cross-section area) a larger stiffness than the compliant portion.

The flexure hinge connects the (e.g., rigid) blade portions with each other such that a portion of the flexure hinge is formed by a structure of the blade which remains in the blade after manufacture and transportation of the blade is completed.

The (e.g., rigid) blade portions are, in particular, lengthwise blade portions being arranged next to each other in the length direction of the blade. The (e.g., rigid) blade portions include, for example, an inboard and an outboard blade portion.

By bending the flexure hinge and, thus, deforming a material of the flexure hinge, a movement of the (e.g., rigid) blade portions relative to each other is possible.

Further, during transporting the blade, the flexure hinge is bent according to a curvature of the transportation path.

According to a further embodiment, the blade portions are moved (e.g., inclined) relative to each other by bending the flexure hinge according to the curvature of the transportation path.

Thus, even long blades can be transported along a curved transportation path.

According to a further embodiment, the bending axis is arranged perpendicular or parallel to a chord line of the blade.

The blade is, in particular, transported in a horizontal position of the blade. The horizontal position of the blade includes an orientation of the blade such that: i) the chord line of the blade is arranged (e.g., substantially) parallel to a plane of a loading floor of a transportation vehicle, a plane of the transportation path and/or a ground; and/or ii) an angle between the chord line and said plane is 60° (i.e. 60 degree) or smaller, 45° or smaller and/or 30° or smaller; or iii) the chord line is arranged (e.g., substantially) perpendicular to said plane.

The orientation i) and ii) is, for example, applied for a road transportation of the blade. The orientation iii) is, for example, applied for a rail transportation of the blade.

Having the bending axis of the flexure hinge arranged perpendicular to the chord line of the blade is of particular advantage for the transportation of the blade in the orientation i) and ii) (e.g., road transport).

Further, having the bending axis of the flexure hinge arranged parallel to the chord line of the blade is of particular advantage for the transportation of the blade in the orientation iii) (e.g., rail transport).

The chord line of the blade is, in particular, an imaginary line connecting, as seen in cross-section, a leading edge and a trailing edge of the blade.

The bending axis being arranged perpendicular to the chord line includes, for example, that the bending axis is arranged parallel to a direction pointing from a pressure side to a suction side of the blade.

In embodiments, the bending axis is arranged quasi-perpendicular to the chord line of the blade which includes an angle between the bending axis and the chord line in the range of 80° to 100° and/or 85° to 95°.

In embodiments, the bending axis is arranged quasi-parallel to a chord line of the blade which includes an angle between the bending axis and the chord line in the range of 10° to - 10° and/or 5° to -5°.

According to a further embodiment, the compliant portion and/or a remaining structure of the blade includes at least one beam, spar cap and/or shear web of the blade.

The at least one beam, spar cap and/or shear web of the blade is, in particular, a load carrying structure and/or a reinforcement beam of the blade.

The shear web is connecting the blade shells of the pressure side and the suction side in the interior cavity of the blade. The shear web provides shear strength to the blade. The wind turbine blade may also include more than one shear web. For each shear web, for example, two spar caps might be provided, one of them being arranged at the pressure side shell and one of them being arranged at the suction side shell.

Thus, for transportation of the blade, the at least one beam, spar cap and/or shear web of the blade is provided already in its completed state. Hence, interruptions of the at least one beam, spar cap and/or shear web are avoided. Further, after transportation of the blade, the at least one beam, spar cap and/or shear web of the blade do not need to be reinforced and/or repaired. Therefore, joints of the at least one beam, spar cap and/or shear web of the blade are avoided such that the at least one beam, spar cap and/or shear web of the blade retains its structural efficiency and strength.

According to a further embodiment, the blade comprises a recessed structure having at least one recess in the compliant portion, and the recessed structure includes a shell, pressure side shell and/or suction side shell of the blade.

For example, the recessed structure includes at least a part of the shell, pressure side shell and/or suction side shell of the blade.

This allows to configure the compliant portion such that it can be advantageously used for transporting the blade in the orientation i) and/or ii) (see above).

The at least one recess is provided for realizing the compliant portion. By providing the at least one recess - instead of in a load carrying structure such as a beam, spar cap and/or web of the blade - in a shell of the blade, in step c) only one or more recesses in the respective shell have to be filled and joined with material. Hence, joints of the most load carrying structure are avoided.

According to a further embodiment, the compliant portion and/or a remaining structure of the blade includes a pressure side shell or suction side shell of the blade.

This allows to configure the compliant portion such that it can be advantageously used for transporting the blade in the orientation iii) (see above).

Further, during operation of the turbine, the suction side shell of the blade is mostly loaded under tension, which is generally more critical with regards to the fatigue strength. Hence, in this case the remaining structure of the blade includes advantageously the suction side shell, whereas the recessed structure includes the pressure side shell.

According to a further embodiment, the blade comprises a recessed structure having at least one recess in the compliant portion, and the recessed structure includes a shear web and/or a spar cap of the blade.

In case that one of the suction side and the pressure side forms the remaining structure and the other one of the suction side and the pressure side includes the at least one recess, the spar cap associated with the other one of the suction side and the pressure side may also include at least one recess. In addition, also the shear web may have a corresponding recess in the compliant portion.

According to a further embodiment,
the compliant portion is arranged at a distance from a root portion of the blade of at least 10% of a blade length, at least 20% of the blade length, at least 30% of the blade length and/or at least 50% of the blade length, and/or
the compliant portion is arranged at a distance from the root portion of the blade of at most 90% of the blade length, at most 80% of the blade length, at most 70% of the blade length and/or at most 50% of the blade length.

Having the compliant portion arranged about midway between the root portion and the tip portion of the blade (i.e. at a distance from the root portion between about 30% and 70% of the blade length and/or at a distance from the root portion of about 50% of the blade length) allows the transportation of the blade through narrower curves of the transportation path.

Having the compliant portion arranged in the outboard portion of the blade (i.e. at a distance from the root portion between about 50% and 90% of the blade length and/or between about 70% and 90% of the blade length) is of advantage for the structural stability of the blade during transportation.

According to a further embodiment, reinforcing the compliant portion includes arranging one or more pre-cast elements in the compliant portion and joining the one or more pre-cast elements with a remaining structure and/or a recessed structure of the blade.

The one or more pre-cast elements are, for example, joined with the remaining structure and/or the recessed structure of the blade, by means of an adhesive and/or a laminate joint. A laminate joint includes providing a fiber lay-up in a connection region, impregnating and/or infusing the fiber lay-up with resin and curing the resin.

According to a further embodiment, reinforcing the compliant portion includes arranging a fiber lay-up in the compliant portion, impregnating and/or infusing the fiber lay-up with resin and curing the resin for providing a laminate joint with a remaining structure and/or a recessed structure of the blade.

For example, the fiber lay-up includes fibers in a dry condition (i.e. without any resin), semi-dry fibers and/or pre-impregnated fibers (prepreg).

The fiber lay-up includes, for example, glass fibers, carbon fibers, aramid fibers and/or natural fibers.

The fiber lay-up may include a core material, such as wood, balsa, PET foam and/or PVC foam. The core material may be sandwiched between layers of fibers such that a fiber-reinforced resin laminate with a core structure is obtained. The fiber lay-up may also include pultruded profiles.

The resin is infused into the fiber lay-up, for example, in a vacuum-assisted manner. For example, the fiber lay-up is covered with one or more vacuum bags and a vacuum is generated in a space covered by the vacuum bag. The resin is then infused into this space due to the generated vacuum, and is, thus, wetting the fibers. However, the resin may also be applied with a hand lamination technique, e.g., with a roller, to the single layers.

The resin includes, for example, thermosets, thermoplastics, epoxy, polyurethane, vinyl ester and/or polyester.

The resin is, for example, cured by applying heat. The result is a fiber-reinforced resin laminate.

According to a further embodiment, the one or more pre-cast elements and/or the fiber lay-up are/is arranged in the at least one recess of the recessed structure and joined with the recessed structure.

According to a further embodiment, the method comprises:
fixing a stiffening element at the blade for temporarily stiffening the compliant portion for lifting and/or handling the blade, and/or
removing the stiffening element before step b).

The stiffening element is, in particular, releasably fixed at the blade. The stiffening element is, for example, fixed at the blade by means of a screw connection, screws, nuts and the like.

The stiffening element provides temporarily a higher stiffness of the blade for handling the blade. The stiffening element is, in particular, attached to the blade for handling the blade before the compliant portion has been reinforced in step c). For example, the stiffening element allows lifting the blade - e.g., before step b) - onto a loading floor/area of a transportation vehicle or lifting the blade - e.g., after step b) - from the loading floor/area of the transportation vehicle (e.g., to the ground).

According to a further embodiment, a deflection of the flexure hinge is monitored during transporting the blade.

By monitoring the deflection of the flexure hinge of the blade during transportation of the blade, a strain of the flexure hinge can be monitored.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a wind turbine according to an embodiment;
Fig. 2 shows an embodiment of a blade of the wind turbine of Fig. 1 in a transportation state in which the blade comprises a compliant portion;
Fig. 3 shows a partial detailed view of Fig. 2;
Fig. 4 shows a view similar as Fig. 2 but with stiffening elements fixed to the blade to temporarily stiffen the compliant portion;
Fig. 5 shows the blade of Fig. 4 arranged on a transportation vehicle, wherein the stiffening elements are removed;
Fig. 6 shows a cross-section view of the blade of Fig. 5, the cross-section taken along line VI-VI in Fig. 5;
Fig. 7 shows a blade of the wind turbine of Fig. 1 in a transportation state and arranged on a transportation vehicle according to a further embodiment;
Fig. 8 shows a cross-section view of the blade of Fig. 7, the cross-section taken along line VIII-VIII in Fig. 7;
Fig. 9 shows a curved transportation path from above with a position of the blade of Fig. 2 indicated;
Fig. 10 illustrates a method step of reinforcing the compliant portion of the blade after transporting the blade;
Fig. 11 shows a detailed view of the blade of Fig. 7, further a method step of reinforcing the compliant portion of the blade after transporting the blade is illustrated; and
Fig. 12 shows a flowchart illustrating a method for transporting a wind turbine blade of the wind turbine of Fig. 1 according to an embodiment.

In the Figures, like reference numerals designate like or functionally equivalent elements, unless otherwise indicated.

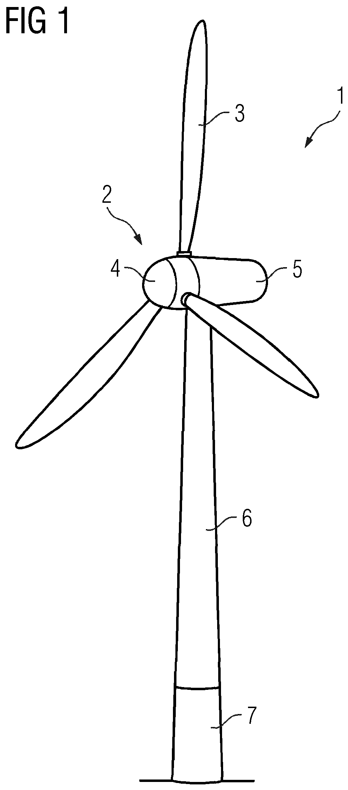

Fig. 1 shows a wind turbine 1 according to an embodiment. The wind turbine 1 comprises a rotor 2 having one or more blades 3 connected to a hub 4. The hub 4 is connected to a generator (not shown) arranged inside a nacelle 5. During operation of the wind turbine 1, the blades 3 are driven by wind to rotate and the wind's kinetic energy is converted into electrical energy by the generator in the nacelle 5. The nacelle 5 is arranged at the upper end of a tower 6 of the wind turbine 1. The tower 6 is erected on a foundation 7 such as a monopile or concrete foundation. The foundation 7 is connected to and/or driven into the ground or seabed.

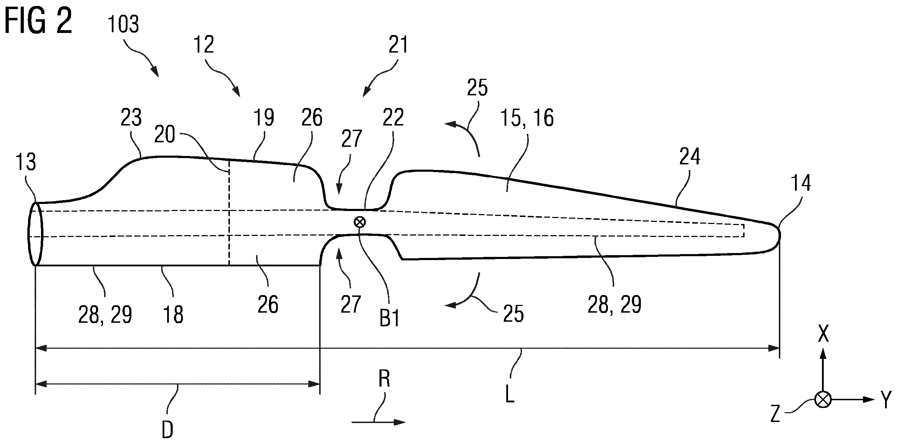

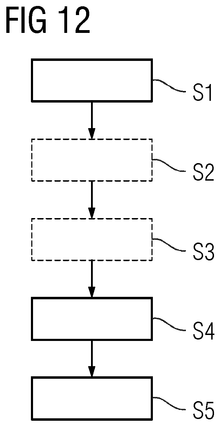

In the following an improved method for transporting a wind turbine blade 3 according to an embodiment is described with respect to Figs. 2 to 12.

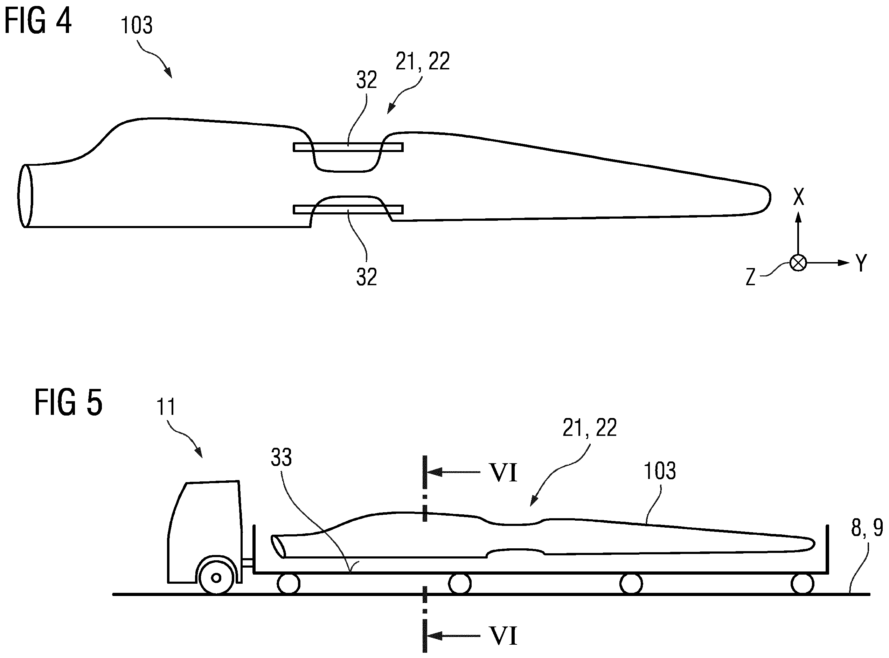

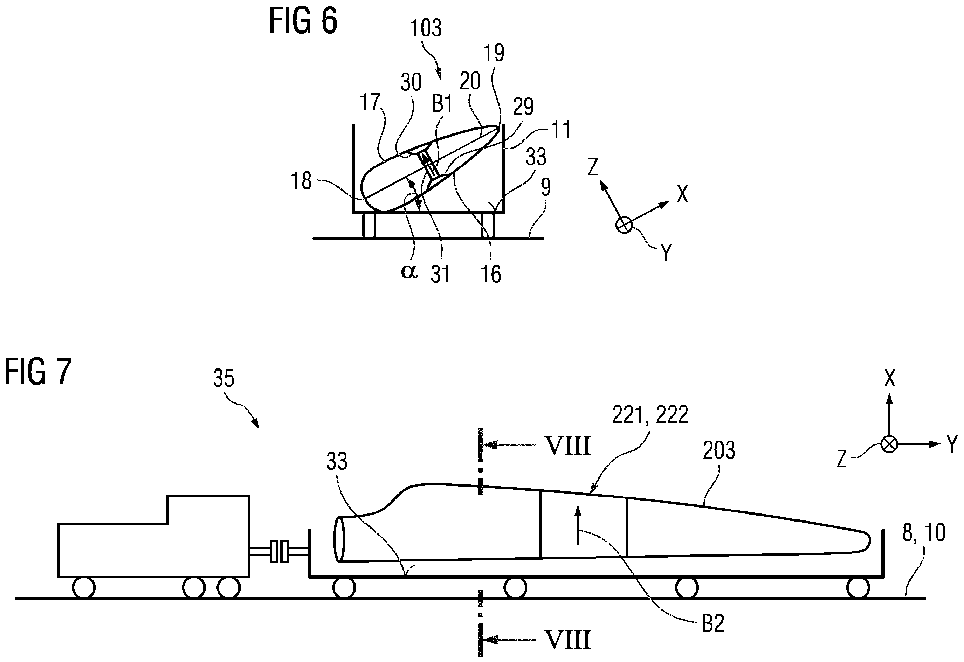

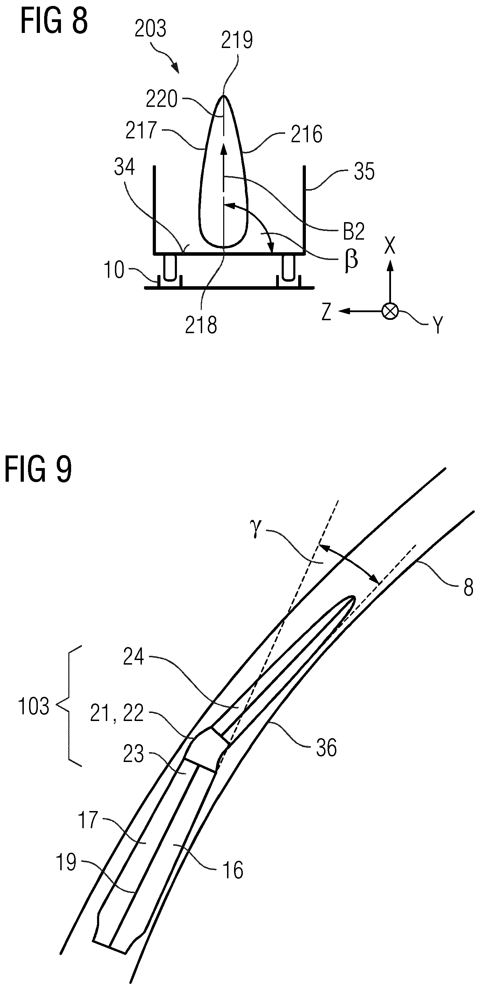

The method is particularly suited for transporting a large wind turbine blade 103 (Fig. 2) in one piece along a curved transportation path 8 (Fig. 9). The transportation path 8 is, in particular, located onshore. In other words, the proposed method is a method for an onshore transportation of the blade 103. The transportation path 8 may be a road 9 (Fig. 5) or a railway 10 (Fig. 7). Hence, a transportation vehicle for transporting the blade 103 may be a road vehicle 11 (Fig. 5) or a train 35 (Fig. 7).

The wind turbine blade 103 is, for example, transported from a manufacturing site of the blade 103 to an erection site of the wind turbine 1 or an intermediate station on the way to the erection site. For example, in case of an on-shore wind turbine 1, the blade 103 may be transported by the described method directly to an on-shore erection site of the wind turbine 1. Further, in case of an offshore wind turbine 1, the blade 103 may be transported by the described method, for example, to a harbor site.

In a first step S1 of the method, a blade 103 (Fig. 2) in a transportation state 12 is provided. The transportation state 12 is a state in which the blade 103 can be transported in one piece along the curved path 8 (Fig. 9) without damaging the blade 103. In the transportation state 12, the blade 103 is not yet completed for operation.

As shown in Fig. 2, the blade 103 comprises a root portion 13 and a tip portion 14. The root portion 13 of the blade 103 is configured for being - after step c) - fixedly or rotatably connected to the hub 4 (Fig. 1). A length L of the blade 103 between the root portion 13 and the tip portion 14 is, for example, larger than 50 meters and/or larger than 80 meters.

The blade 103 comprises a shell 15 defining an outer shape of the blade 103. The shell 15 is, for example, made of a fiber-reinforced laminate. The blade 103 has - apart from the cylindrical root portion 13 and apart from a compliant portion 21 - an aerodynamical outer shape. In particular, the blade 103 comprises a pressure side 16 and a suction side 17 (Figs. 2 and 6). In other words, the shell 15 comprises a pressure side shell 16 and a suction side shell 17. The pressure side 16 and the suction side 17 are connected with each other at a leading edge 18 and a trailing edge 19. A chord line 20 is connecting the leading edge 18 and the trailing edge 19.

Further shown in Fig. 2 is a coordinate plane with an X-direction being arranged parallel to the chord line 20, an Y-direction being arranged parallel to a length direction R of the blade 103 and a Z-direction being arranged perpendicular to the chord line 20.

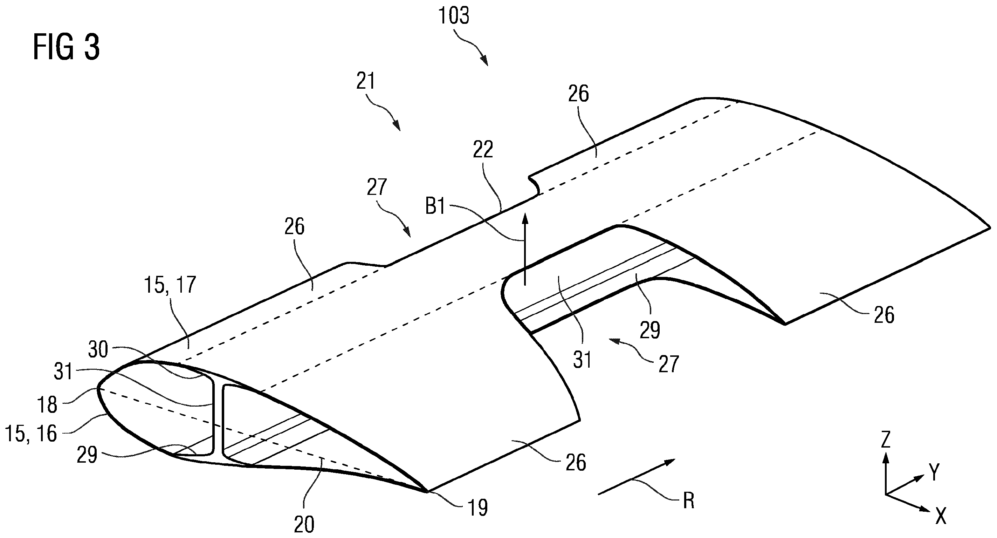

Fig. 3 shows a partial perspective view of the blade 103 of Fig. 2.

In the first step S1 of the method, the blade 103 is provided with a compliant portion 21 as illustrated in Fig. 2. The compliant portion 21 forms a flexure hinge 22 which can be bent around a bending axis B1. The bending axis B1 is arranged perpendicular to the length direction R of the blade 103. Hence, bending the flexure hinge 22 allows an easier transportation of the blade 103 on the curved transportation path 8 (Fig. 9). The flexure hinge 22 is, in particular, bent by deforming a material of the flexure hinge 22. It is noted that the compliant portion 21/flexure hinge 22 is indicated in Fig. 9 only very schematically (basically just a box is shown as a placeholder). Details of features and embodiments of the compliant portion 21/flexure hinge 22 are shown in and described with respect to Figs. 2 to 8, 10 and 11.

Furthermore, the blade 103 includes an inboard blade portion 23 and an outboard blade portion 24 connected with each other by the flexure hinge 22. By bending the flexure hinge 22 around the bending axis B1, the inboard and outboard blade portions 23, 24 can be moved relative to each other. In particular, the blade portions 23, 24 can be inclined relative to each other (Fig. 9).

In the example of Fig. 2, the bending axis B1 is - in addition to being arranged perpendicular to the length direction R of the blade 103 - also arranged perpendicular to the chord line 20 of the blade 103 (parallel to the Z-direction in Fig. 2). The arrows 25 indicate a movement of the outboard blade portion 24 relative to the inboard blade portion 23 during bending of the flexure hinge 22.

In other examples (Figs. 7, 8, 11), a bending axis B2 may also - in addition to being arranged perpendicular to the length direction R of the blade 103 - be arranged parallel to the chord line 20 of the blade 103.

As shown in Fig. 2, the compliant portion 21 is, for example, arranged at a distance D from the root portion 13 of the blade 103 of at least 30% of the blade length L. In other examples, the compliant portion 21 may also be arranged at another distance D from the root portion 13.

For providing the compliant portion 21 with the flexure hinge 22, the blade 103 comprises in the transportation state 12 a recessed structure 26 having at least one recess 27. In the example of Fig. 2, the recessed structure 26 includes the shell 15, in particular the pressure side and suction side shells 16, 17 (Fig. 3). Furthermore, the blade 103 comprises in the transportation state 12 a remaining structure 28 extending throughout the compliant portion 21. In the example of Fig. 2, the remaining structure 28 includes a spar cap 29 arranged on the pressure side 16, a spar cap 30 arranged on the suction side 17 and a shear web 31 connecting the spar caps 29, 30 with each other (Fig. 6).

Moreover, in the example of Fig. 2, the remaining structure 28, e.g., the spar caps 29, 30 and the shear web 31, extends along the inboard portion 23 and along the outboard portion 24 of the blade 103. For example, the blade 103 comprises a one-piece spar cap 29, a one-piece spar cap 30 and/or a one-piece shear web 31, wherein one, several or all of them are extending through the (e.g., entire) blade 103 including the compliant portion 21.

In an optional second step S2 of the method, one or more stiffening elements 32 are fixed to the blade 103 for temporarily stiffening the compliant portion 21, as shown in Fig. 4. By use of the stiffening elements 32, the compliant portion 21 of the blade 103 can be temporarily stiffened for better handling of the blade 103. The stiffening elements 32 are, for example, fixed to the blade 103 before lifting the blade 103 onto a loading floor/area 33 of the transportation vehicle 11 (Fig. 5).

In an optional third step S3 of the method, the one or more stiffening elements 32 are removed again. Fig. 5 shows the blade 103 with the compliant portion 21 (i.e. the flexure hinge 22), the blade being arranged on the loading floor/area 33 of the transportation vehicle 11. The stiffening elements 32 have been already removed in Fig. 5.

Fig. 6 shows a cross-section view along line VI-VI in Fig. 5. In this example, the blade 103 is arranged in an orientation on the loading floor/area 33 of the vehicle 11 with an angle α between the loading floor/area 33 and the chord line 20 of the blade 103. In a preferred orientation for a transport on a road 9, the angle α has a value of 60° or smaller, 45° or smaller, 30° or smaller and/or 0° (an angle α of 0° corresponds to a case in which the chord line 20 of the blade 103 is arranged parallel to the plane of the loading floor/area 33 of the transportation vehicle 11.

However, in other examples, as shown in Fig. 8, a blade 103, 203 may also be arranged on a loading floor/area 34 of a transportation vehicle 35 such that a chord line 220 of the blade 203 is substantially perpendicular to the plane of the loading floor/area 34. That means, an angle β between the plane of the loading floor/area 34 and the chord line 220 is, for example, between 80° and 100°, between 85° and 95° and/or is 90°. This is a preferred orientation for a transport by train 35 (rail transportation).

In a fourth step S4 of the method, the blade 103 is transported along the curved transportation path 8, as shown in Figs. 5, 6 and 9 for the blade 103 and in Figs. 7 and 8 for the blade 203.

During transporting of the blade 103, the compliant portion 21 with the flexure hinge 22 is bent according to a curvature 36 (Fig. 9) of the transportation path 8. Further, by bending the flexure hinge 22, the inboard and outboard blade portions 23, 24 are moved relative to each other; in particular, they are inclined relative to each other by an angle γ.

During transporting the blade 103, a deflection of the flexure hinge 22 may, for example, be monitored. The deflection of the flexure hinge 22 may, for example, be determined by means of one or more strain gages or other suitable deflection sensors (not shown).

Optionally, after transporting the blade 103 in step S4, steps S2 and S3 may be carried out (e.g., again) at an arrival site (e.g., an erection site of the wind turbine 1 or an intermediate station at which transportation means are changed). In particular, before unloading the blade 103 from the transportation vehicle 11, 35 (Figs. 5, 7), stiffening elements 32 (Fig. 4) may be attached to the blade 103 (S2) in order to temporarily stiffen the compliant portion 21 for lifting the blade 103. After unloading the blade 103, the stiffening elements 32 may be removed again from the blade 103 (S3).

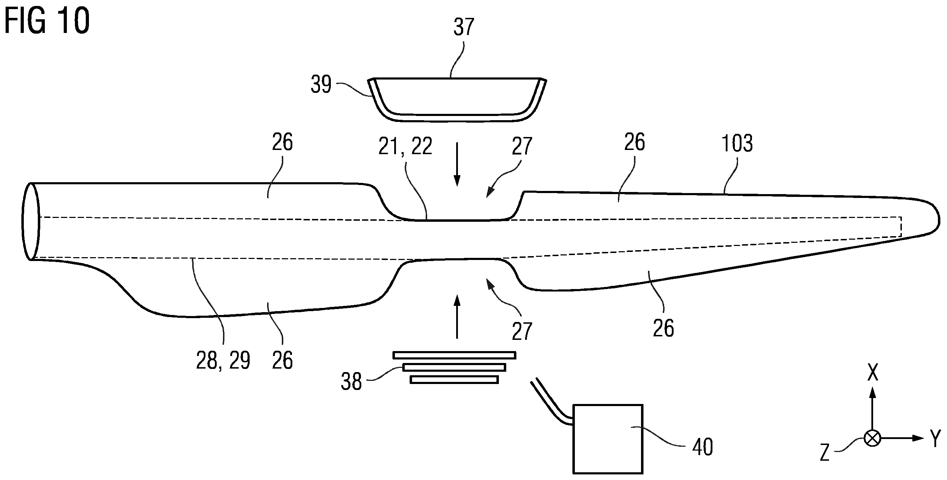

In a fifth step S5 of the method, the compliant portion 21 is reinforced, as illustrated in Fig. 10. Reinforcing the compliant portion 21 includes, for example, a repair of the compliant portion 21. By reinforcing (e.g., repairing) the compliant region 21, the blade 103 is transformed from the transportation state 12 (Fig. 2) to the completed state (Fig. 1) in which it is ready for operation.

In Fig. 10, exemplarily both arranging of pre-cast elements 37 as well as arranging of a fiber lay-up 38 in the compliant portion 21 of the blade 103 is illustrated.

As shown in Fig. 10, one or more pre-cast elements 37 may be arranged in one or more recesses 27 of the recessed structure 26 of the blade 103. Further, the one or more pre-cast elements 37 are then joined with the remaining structure 28 and/or with the recessed structure 26 of the blade 103 to reinforce the compliant portion 21. The joining process may include the application of an adhesive 39 or the generation of a laminate joint by arranging a fiber lay-up in a connection region, infusing the fiber lay-up with resin and curing the resin.

As further illustrated in Fig. 10, reinforcing the compliant portion 21 may - in addition or instead to the use of pre-cast elements 37 - also include arranging a fiber lay-up 38 in the compliant portion 21 (e.g., in the one or more recesses 27). The fiber lay-up 38 is then infused with resin 40. By curing the resin 40, a fiber-reinforced structure is produced to reinforce (e.g., repair) the blade 103 (e.g., to fill the one or more recesses 27). By said resin infusion and curing of the fiber lay-up 38, the fiber lay-up 38 is also joined with the remaining structure 28 and/or the recessed structure 26 of the blade 103.

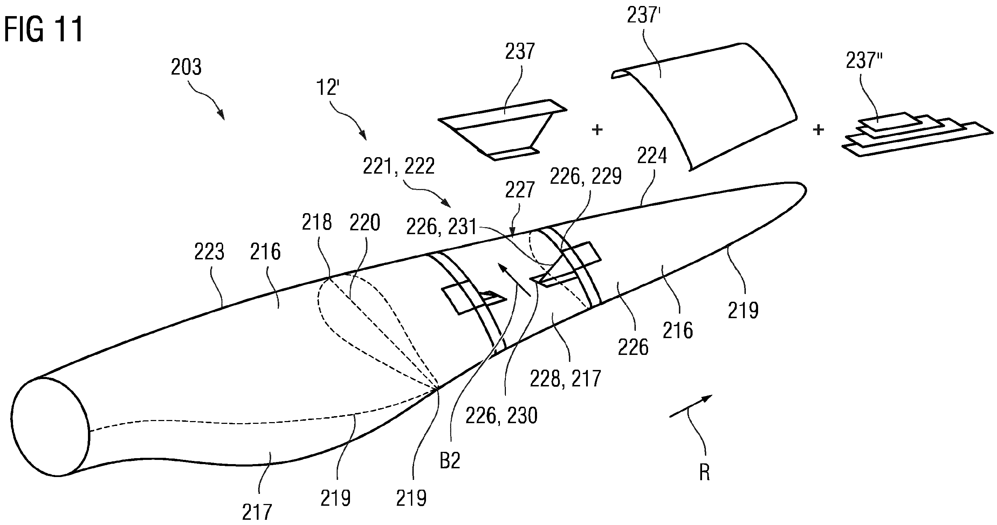

Figs. 7, 8 and 11 show a further embodiment of a blade 203 with a compliant portion 221 forming a flexure hinge 222. The blade 203 is shown in Fig. 7 on a transportation vehicle 35, in Fig. 8 in cross-section along line VIII-VIII in Fig. 7 and in Fig. 11 in perspective view. The blade 203 comprises an inboard portion 223 and an outboard portion 224 connected with each other by the flexure hinge 222. Reference sign 216 denotes a pressure side shell, reference sign 217 denotes a suction side shell, reference sign 218 denotes a leading edge and reference sign 219 denotes a trailing edge. Further, also a chord line 220 of the blade 203 is illustrated in Figs. 8 and 11.

In the example of Fig. 11, a remaining structure 228 extending throughout the compliant portion 221 is formed by the suction side shell 217. Further, a recessed structure 226 includes, for example, a recessed pressure side shell 216, a recessed spar cap 229 at the pressure side 216 and a recessed shear web 231. The recessed structure 226 may optionally further include a (e.g., partially) recessed spar cap 230 at the suction side 217.

The flexure hinge 222 of the blade 203 is configured such that the blade 203 can be bent around a bending axis B2 being arranged perpendicular to a length direction R of the blade 203 and parallel to the chord line 220. This configuration of the flexure hinge 222 is advantageous for a transportation of a blade 203 in the orientation shown in Fig. 8.

Further illustrated in Fig. 11 is the step S5 of reinforcing the blade 203 after transportation in step S4. Exemplarily, pre-cast elements 237, 237' and 237" are shown which are used to fill the respective recesses 227 of the recessed structures 226 (e.g., of the recessed shell 216, the recessed spar caps 229, 230 and/or the recessed shear web 233).

Thus, by providing a blade 103, 203 with the described flexure hinge 21, 221, the blade 103, 203 has a sufficient flexibility to allow overland transportation on a curved transportation path 8 by a road vehicle 11 or a train 35, even for large blades 103, 203.

Although the present invention has been described in accordance with preferred embodiments, it is obvious for the person skilled in the art that modifications are possible in all embodiments.

## Claims

1. A method for transporting a wind turbine blade (3), comprising:
a) providing (S1) a blade (103) with a compliant portion (21) forming a flexure hinge (22) for being bent around a bending axis (B1, B2) arranged perpendicular to a length direction (R) of the blade (103),
b) transporting (S4) the blade (103) along a curved transportation path (8), wherein the flexure hinge (22) is bent according to a curvature (36) of the transportation path (8), and
c) reinforcing (S5) the compliant portion (21).

2. The method according to claim 1, wherein the blade (103) comprises a remaining structure (28) extending throughout the compliant portion (21) and a recessed structure (26) having at least one recess (27) in the compliant portion (21).

3. The method according to claim 1 or 2, wherein the blade (103) comprises at least two blade portions (23, 24) connected to each other by the flexure hinge (22), the flexure hinge (22) being configured to move the blade portions (23, 24) relative to each other by bending the flexure hinge (22) around the bending axis (B1, B2).

4. The method according to one of claims 1 - 3, wherein, during transporting the blade (103), the blade portions (23, 24) are moved relative to each other by bending the flexure hinge (22) according to the curvature (36) of the transportation path (8).

5. The method according to one of claims 1 - 4, wherein the bending axis (B1, B2) is arranged perpendicular or parallel to a chord line (20) of the blade (103).

6. The method according to one of claims 1 - 5, wherein the compliant portion (21) and/or a remaining structure (28) of the blade (103) includes at least one beam (29, 30, 31), spar cap (29, 30) and/or shear web (31) of the blade (103).

7. The method according to one of claims 1 - 6, wherein the blade (103) comprises a recessed structure (26) having at least one recess (27) in the compliant portion (21), and the recessed structure (26) includes a shell (15), pressure side shell (16) and/or suction side shell (17) of the blade (103).

8. The method according to one of claims 1 - 6, wherein the compliant portion (221) and/or a remaining structure (228) of the blade (203) includes a pressure side shell (216) or a suction side shell (217) of the blade (203).

9. The method according to claim 8, wherein the blade (203) comprises a recessed structure (226) having at least one recess (227) in the compliant portion (221), and the recessed structure (226) includes a shear web (231) and/or a spar cap (229, 230) of the blade (203).

10. The method according to one of claims 1 - 9, wherein
the compliant portion (21) is arranged at a distance (D) from a root portion (13) of the blade (103) of at least 10% of a blade length (L), at least 20% of the blade length (L), at least 30% of the blade length (L) and/or at least 50% of the blade length (L), and/or
the compliant portion (21) is arranged at a distance (D) from the root portion (13) of the blade (103) of at most 90% of the blade length (L), at most 80% of the blade length (L), at most 70% of the blade length (L) and/or at most 50% of the blade length (L).

11. The method according to one of claims 1 - 10, wherein reinforcing the compliant portion (21) includes arranging one or more pre-cast elements (37) in the compliant portion (21) and joining the one or more pre-cast elements (37) with a remaining structure (28) and/or a recessed structure (26) of the blade (103).

12. The method according to one of claims 1 - 11, wherein reinforcing the compliant portion (21) includes arranging a fiber lay-up (38) in the compliant portion (21), infusing the fiber lay-up (38) with resin (40) and curing the resin (40) for providing a laminate joint with a remaining structure (28) and/or a recessed structure (26) of the blade (103).

13. The method according to claim 11 or 12, wherein the one or more pre-cast elements (37) and/or the fiber lay-up (38) are/is arranged in the at least one recess (27) of the recessed structure (26) and joined with the recessed structure (26).

14. The method according to one of claims 1 - 13, comprising:
fixing (S2) a stiffening element (32) at the blade (103) for temporarily stiffening the compliant portion (21) for lifting and/or handling the blade (103), and/or
removing (S3) the stiffening element (32) before step b).

15. The method according to one of claims 1 - 14, wherein a deflection of the flexure hinge (22) is monitored during transporting the blade (103).

## Patentansprüche

1. Verfahren zum Transportieren einer Windturbinenschaufel (3), umfassend:
a) Bereitstellen (S1) einer Schaufel (103) mit einem nachgiebigen Abschnitt (21), der ein Biegegelenk (22) zum Biegen um eine Biegeachse (B1, B2) bildet, die senkrecht zu einer Längenrichtung (R) der Schaufel (103) angeordnet ist,
b) Transportieren (S4) der Schaufel (103) entlang eines gekrümmten Transportweges (8), wobei das Biegegelenk (22) gemäß einer Krümmung (36) des Transportweges (8) gebogen wird, und
c) Verstärken (S5) des nachgiebigen Abschnitts (21).

2. Verfahren nach Anspruch 1, wobei die Schaufel (103) eine verbleibende Struktur (28), die sich durch den nachgiebigen Abschnitt (21) erstreckt, und eine eingelassene Struktur (26), die mindestens eine Ausnehmung (27) in dem nachgiebigen Abschnitt (21) aufweist, umfasst.

3. Verfahren nach Anspruch 1 oder 2, wobei die Schaufel (103) mindestens zwei Schaufelabschnitte (23, 24) umfasst, die durch das Biegegelenk (22) miteinander verbunden sind, wobei das Biegegelenk (22) dazu ausgelegt ist, die Schaufelabschnitte (23, 24) durch Biegen des Biegegelenks (22) um die Biegeachse (B1, B2) im Verhältnis zueinander zu bewegen.

4. Verfahren nach einem der Ansprüche 1-3, wobei während des Transportierens der Schaufel (103) die Schaufelabschnitte (23, 24) durch Biegen des Biegegelenks (22) gemäß der Krümmung (36) des Transportweges (8) im Verhältnis zueinander bewegt werden.

5. Verfahren nach einem der Ansprüche 1-4, wobei die Biegeachse (B1, B2) senkrecht oder parallel zu einer Sehnenlinie (20) der Schaufel (103) angeordnet ist.

6. Verfahren nach einem der Ansprüche 1-5, wobei der nachgiebige Abschnitt (21) und/oder eine verbleibende Struktur (28) der Schaufel (103) mindestens eine Traverse (29, 30, 31), einen Holmgurt (29, 30) und/oder einen Holmsteg (31) der Schaufel (103) beinhaltet.

7. Verfahren nach einem der Ansprüche 1-6, wobei die Schaufel (103) eine eingelassene Struktur (26) umfasst, die mindestens eine Ausnehmung (27) in dem nachgiebigen Abschnitt (21) aufweist, und die eingelassene Struktur (26) eine Schale (15), eine druckseitige Schale (16) und/oder eine saugseitige Schale (17) der Schaufel (103) beinhaltet.

8. Verfahren nach einem der Ansprüche 1-6, wobei der nachgiebige Abschnitt (221) und/oder eine verbleibende Struktur (228) der Schaufel (203) eine druckseitige Schale (216) oder eine saugseitige Schale (217) der Schaufel (203) beinhaltet.

9. Verfahren nach Anspruch 8, wobei die Schaufel (203) eine eingelassene Struktur (226) umfasst, die mindestens eine Ausnehmung (227) in dem nachgiebigen Abschnitt (221) aufweist, und die eingelassene Struktur (226) einen Holmsteg (231) und/oder einen Holmgurt (229, 230) der Schaufel (203) beinhaltet.

10. Verfahren nach einem der Ansprüche 1-9, wobei
der nachgiebige Abschnitt (21) in einem Abstand (D) von einem Wurzelabschnitt (13) der Schaufel (103) von mindestens 10 % einer Schaufellänge (L), mindestens 20 % der Schaufellänge (L), mindestens 30 % der Schaufellänge (L) und/oder mindestens 50 % der Schaufellänge (L) angeordnet ist und/oder
der nachgiebige Abschnitt (21) in einem Abstand (D) von dem Wurzelabschnitt (13) der Schaufel (103) von höchstens 90 % der Schaufellänge (L), höchstens 80 % der Schaufellänge (L), höchstens 70 % der Schaufellänge (L) und/oder höchstens 50 % der Schaufellänge (L) angeordnet ist.

11. Verfahren nach einem der Ansprüche 1-10, wobei das Verstärken des nachgiebigen Abschnitts (21) Anordnen eines oder mehrerer Fertigelemente (37) in dem nachgiebigen Abschnitt (21) und Zusammenfügen des einen oder der mehreren Fertigelemente (37) mit einer verbleibenden Struktur (28) und/oder einer eingelassenen Struktur (26) der Schaufel (103) beinhaltet.

12. Verfahren nach einem der Ansprüche 1-11, wobei das Verstärken des nachgiebigen Abschnitts (21) Anordnen eines Fasergeleges (38) in dem nachgiebigen Abschnitt (21), Infundieren des Fasergeleges (38) mit Harz (40) und Aushärten des Harzes (40) zum Bereitstellen einer Laminatverbindung mit einer verbleibenden Struktur (28) und/oder einer eingelassenen Struktur (26) der Schaufel (103) beinhaltet.

13. Verfahren nach Anspruch 11 oder 12, wobei das eine oder die mehreren Fertigelemente (37) und/oder das Fasergelege (38) in der mindestens einen Ausnehmung (27) der eingelassenen Struktur (26) angeordnet und mit der eingelassenen Struktur (26) zusammengefügt sind/ist.

14. Verfahren nach einem der Ansprüche 1-13, umfassend:
Befestigen (S2) eines Versteifungselements (32) an der Schaufel (103), um den nachgiebigen Abschnitt (21) zum Anheben und/oder Handhaben der Schaufel (103) vorübergehend zu versteifen, und/oder
Entfernen (S3) des Versteifungselements (32) vor Schritt b).

15. Verfahren nach einem der Ansprüche 1-14, wobei eine Auslenkung des Biegegelenks (22) während des Transportierens der Schaufel (103) überwacht wird.

## Revendications

1. Procédé de transport d'une pale d'éolienne (3), comprenant :
a) la fourniture (S1) d'une pale (103) dotée d'une partie déformable (21) formant une charnière flexible (22) pour être pliée autour d'un axe de pliage (B1, B2) agencé perpendiculairement à une direction de longueur (R) de la pale (103),
b) le transport (S4) de la pale (103) le long d'une trajectoire de transport courbe (8), dans lequel la charnière flexible (22) est pliée selon une courbure (36) de la trajectoire de transport (8), et
c) le renforcement (S5) de la partie déformable (21).

2. Procédé selon la revendication 1, dans lequel la pale (103) comprend une structure restante (28) s'étendant tout au long de la partie déformable (21) et une structure évidée (26) ayant au moins un évidement (27) dans la partie déformable (21).

3. Procédé selon la revendication 1 ou 2, dans lequel la pale (103) comprend au moins deux parties de pale (23, 24) reliées l'une à l'autre par la charnière flexible (22), la charnière flexible (22) étant configurée pour déplacer les parties de pale (23, 24) l'une par rapport à l'autre par pliage de la charnière flexible (22) autour d'un axe de pliage (B1, B2).

4. Procédé selon l'une des revendications 1 à 3, dans lequel, pendant le transport de la pale (103), les parties de pale (23, 24) sont déplacées l'une par rapport à l'autre par pliage de la charnière flexible (22) selon la courbure (36) de la trajectoire de transport (8).

5. Procédé selon l'une des revendications 1 à 4, dans lequel l'axe de pliage (B1, B2) est agencé perpendiculairement ou parallèlement à une ligne de corde (20) de la pale (103).

6. Procédé selon l'une des revendications 1 à 5, dans lequel la partie déformable (21) et/ou une structure restante (28) de la pale (103) inclut au moins une poutre (29, 30, 31), une semelle de longeron (29, 30) et/ou une âme de cisaillement (31) de la pale (103).

7. Procédé selon l'une des revendications 1 à 6, dans lequel la pale (103) comprend une structure évidée (26) ayant au moins un évidement (27) dans la partie déformable (21), et la structure évidée (26) inclut une coque (15), une coque d'intrados (16) et/ou une coque d'extrados (17) de la pale (103).

8. Procédé selon l'une des revendications 1 à 6, dans lequel la partie déformable (221) et/ou une structure restante (228) de la pale (203) inclut une coque d'intrados (216) ou une coque d'extrados (217) de la pale (203).

9. Procédé selon la revendication 8, dans lequel la pale (203) comprend une structure évidée (226) ayant au moins un évidement (227) dans la partie déformable (221), et la structure évidée (226) inclut une âme de cisaillement (231) et/ou une semelle de longeron (229, 230) de la pale (203).

10. Procédé selon l'une des revendications 1 à 9, dans lequel
la partie déformable (21) est agencée à une distance (D) d'une partie de pied (13) de la pale (103) d'au moins 10 % d'une longueur de pale (L), d'au moins 20 % de la longueur de pale (L), d'au moins 30 % de la longueur de pale (L) et/ou d'au moins 50 % de la longueur de pale (L), et/ou
la partie déformable (21) est agencée à une distance (D) de la partie de pied (13) de la pale (103) d'au plus 90 % de la longueur de pale (L), d'au plus 80 % de la longueur de pale (L), d'au plus 70 % de la longueur de pale (L) et/ou d'au plus 50 % de la longueur de pale (L).

11. Procédé selon l'une des revendications 1 à 10, dans lequel le renforcement de la partie déformable (21) inclut l'agencement de les un ou plusieurs éléments pré-moulés (37) dans la partie déformable (21) et la liaison de les un ou plusieurs éléments pré-moulés (37) avec une structure restante (28) et/ou une structure évidée (26) de la pale (103).

12. Procédé selon l'une des revendications 1 à 11, dans lequel le renforcement de la partie déformable (21) inclut l'agencement d'un drapage de fibres (38) dans la partie déformable (21), l'infusion du drapage de fibres (38) avec de la résine (40) et le durcissement de la résine (40) pour fournir un joint stratifié avec une structure restante (28) et/ou une structure évidée (26) de la pale (103).

13. Procédé selon la revendication 11 ou 12, dans lequel les un ou plusieurs éléments pré-moulés (37) et/ou le drapage de fibres (38) sont agencés/est agencé dans l'au moins un évidement (27) de la structure évidée (26) et liés/lié avec la structure évidée (26).

14. Procédé selon l'une des revendications 1 à 13, comprenant :
la fixation (S2) d'un élément de rigidification (32) au niveau de la pale (103) pour rigidifier temporairement la partie déformable (21) pour le levage et/ou la manipulation de la pale (103), et/ou
le retrait (S3) de l'élément de rigidification (32) avant l'étape b).

15. Procédé selon l'une des revendications 1 à 14, dans lequel un fléchissement de la charnière flexible (22) est surveillé pendant le transport de la pale (103).
